# EUROPEAN PATENT APPLICATION

(11) **EP 4 557 661 A1**
(43) Date of publication of application: **21.05.2025**
(21) Application number: 23210298.8
(22) Date of filing: 16.11.2023
(51) Int. Cl.: H04L 9/40, H04W 12/04, H04W 12/041, H04W 12/0431, H04W 12/06, H04W 12/069, H04W 12/72

(54) **SECURE ELEMENT, TERMINAL DEVICE COMPRISING THE SECURE ELEMENT, SYSTEM COMPRISING THE TERMINAL DEVICE AND METHODS THEREOF**

(71) Applicant: Giesecke+Devrient Mobile Security Germany GmbH, 81677 München (DE)
(72) Inventor: Pandey, Ankit, 412101 Pune (IN)
(74) Representative: Ter Meer Steinmeister & Partner

(57) **Abstract**

Provided is a secure element to securely communicate over a mobile communication network. The secure element comprises a secure storage unit, in which a subscriber authentication key is stored. The secure element further comprises a secure control unit which is configured to firstly generate a session subscriber authentication key, e.g., during getting identity of the secure element, and, based on receiving an authentication request from a core network entity, to authenticate the secure element to the core network entity using the previously generated session subscriber authentication key. Furthermore, provided is a terminal device comprising the secure element, a system comprising the terminal device and a core network entity and corresponding methods of the secure element, the terminal device and the system.

## Description

The present invention relates to a secure element, a terminal device comprising the secure element, a system comprising the terminal device and a core network entity to securely communicate over a mobile communications network. The invention further relates to corresponding methods of the secure element, the terminal device and the system.

Massive amounts of devices connect daily to existing mobile communication networks. The number of devices, in particular terminal devices or end (user) devices, is increasing at an accelerating pace due to the fourth industrial revolution which is driven by the Internet of Things, IoT.

For a secured communication over the mobile communication network, a mobile communication is required to include a secure element, in particular a subscriber identity module, SIM, including at least one subscription profile. The subscription profile is a set of subscription data, including at least the International Mobile Subscriber Identity, IMSI, and the subscriber authentication key K. The profile enables the terminal device to authenticate the terminal device to the mobile communication network and vice versa.

The subscriber authentication key is a static key, which is individualized per secure element and shared between the secure element and the mobile communication network, e.g. its authentication center (AuC). Furthermore, the subscriber authentication key must not be revealed to any other entity of the system, not even the terminal device comprising the secure element. These restrictions are currently met by a static subscriber authentication key K which is securely transferred to the secure element initially and stored in a secure memory. Such static subscriber authentication key K forces that for each authentication with a particular subscription profile, the same subscriber authentication key is to be used over the entire lifetime of the secure element. Such multiple usage of the same key is a security risk, in particular if the multiple usage lasts for years.

Hence, there is a need for at least partially reducing existing security risks for a mutual authentication of a secure element to a mobile communication network, in particular its core network.

This objective is solved with the features of the independent claims. Further advantageous embodiments are described in the dependent patent claims.

In an aspect of the present invention there is provided a secure element being adapted to securely communicate over a mobile communication network.

For attaching to a mobile communication network, a challenge-response authentication procedure may be performed. Therein, the terminal device sends to an entity of the mobile communication network, over the mobile communication network, a network attach request. The mobile communication entity sends to the terminal device over the mobile communication network an authentication challenge. The terminal device generates an authentication response based on the received challenge and a secret cryptographic key of the SIM. Only after successful execution of the challenge-response authentication, the exchange of data between the terminal device and the backend system begins. The attach procedure is part of the signaling mechanism.

Authentication procedures, in particular, the AUTHENTICATE command are specified in the norm ETSI TS 131 102 and ETSI TS 131 103. The mechanism achieves mutual authentication by the terminal device and the mobile communication network showing knowledge of a secret key K (also called- subscriber authentication key) which is shared between and available only to the secure element of the terminal device and the authentication center (AuC) in the user's home environment of the mobile communication network.

The secure element comprises a secure storage unit, in which a subscriber authentication key is stored. The subscriber authentication key is required for authenticating the secure element to a core network entity and vice versa, e.g., using the AUTHENTICATE command as for instance specified in the above-cited norms. The subscriber authentication key is a static key which only exists in the secure storage unit of the secure element, and in a secure storage which may be accessed by the core network entity for authentication purposes. The secure storage unit may store several subscriber authentication keys, wherein each subscriber authentication key may be included in a different subscription profile. Each subscriber authentication key may relate to the same or to a different core network entity.

Moreover, the secure control element comprises a secure control unit which is configured to firstly (also referred to as freshly) generate a session subscriber authentication key, and, based on receiving an authentication request from the core network entity, to authenticate the secure element to the core network entity using the previously generated session subscriber authentication key. In other words, before authentication, the secure element is adapted to generate a new, fresh subscriber authentication key which then may be used for a subsequent communication session or multiple subsequent communication sessions. Thus, secure element may subsequently authenticate to the core network entity using the new, freshly generated session subscriber authentication key instead of the static, initially available subscriber authentication key. A communication session is a time-delimited two-way connection between the secure element and the mobile communication network. A communication session may be established based on a successful mutual authentication between the secure element and the mobile communication network and may be terminated by either the secure element or an instance of the mobile communication network.

The generation of the session subscriber authentication key may occur prior to initializing the authentication procedure between secure element and core network entity. The generation of the session subscriber authentication key may be independent from the authentication procedure, meaning that the generation of the session subscriber authentication key may not be part of the authentication procedure.

The previously generated session subscriber authentication key may be individualized as it is generated directly by the secure control unit of the secure element. Individualization may be achieved, for instance, through a random seed for generating the session subscriber authentication key.

Authenticating the secure element to the core network entity using a session subscriber authentication key which is previously generated by the secure element in the secure element has the advantage that the subscriber authentication key may be securely rotated, i.e., the new session subscriber authentication key may replace the static subscriber authentication key This rotation of the subscriber authentication key increases the security of the authentication mechanism with the core network, thereby providing the basis for a secured communication over the mobile communication network.

The core network is a dedicated part of a mobile communication home network hosting a network access security domain, i.e., a set of security features that enable a terminal device to authenticate and access services via the mobile communication network securely, including the 3GPP access and Non-3GPP access, and in particular, to protect against attacks on its (radio) interfaces.

The freshly generated session subscriber authentication key may be stored in the secure storage unit. The secure control unit of the secure element may be configured to directly store the generated session subscriber authentication key in the secure storage unit such that the new session subscriber authentication key is not revealed outside the secure storage unit of the secure element.

Using the freshly generated session subscriber authentication key instead of the original subscriber authentication key, the AUTHENTICATE command of above-cited norms may be executed exactly as specified.

In a preferred embodiment, the secure control unit is further configured to receive an identity request from a terminal device and to generate the session subscriber authentication key based on the received identity request.

The identity request may be an optional function in the application layer of the secure element, such as the GET IDENTIY command as specified in above-cited norms. Thus, the generation of a new session subscriber authentication key may be triggered in the secure element using an existing mechanism, such as the identity request. The identity request is preferred as trigger for the generation of the new subscriber authentication key since it is usually executed before the first authentication request or, optionally, before each authentication request. Hence, in principle, a secure element according to this aspect of the invention may still authenticate to the core network entity even in case the originally provided subscriber authentication key is compromised.

In a preferred embodiment, a globally unique subscription permanent identifier - SUPI - is stored in the secure storage unit. The SUPI is used as a security requirement of a system, according to which the serving network shall authenticate the SUPI in the process of authentication and key agreement between a terminal device and the network. For 5G systems, e.g., the SUPI is defined in 3GPP TS 23.501.

The secure control unit may be further configured to execute, based on the received identity request, an encryption function to generate a subscription concealed identifier - SUCI - based on the SUPI and additionally the session subscriber authentication key. In other words, the secure control unit may generate the fresh session subscriber authentication key using an existing functionality of the secure element, i.e., the encryption function within the secure element being used to conceal the SUPI. The SUPI is privacy protected over-the-air using a one-time use subscription identifier, the SUCI, which may be generated by the secure element upon receipt of the identity request, in particular the GET IDENTITY command. The fresh session subscriber authentication key thus may be generated by executing the same encryption function that is used to conceal the SUPI. This embodiment ensures a secure generation of the session subscriber authentication key in the secure control unit of the secure element. This embodiment also ensures a secure generation of the session subscriber authentication key using existing secure functionalities and resources of the secure element that already exist within the secure element.

Moreover, the secure control unit may be configured to store the session subscriber authentication key in the secure storage unit. Consequently, the session subscriber authentication key may be used repeatedly for subsequent authentication procedures.

Furthermore, the secure control unit may be configured to return an identity response comprising the subscription concealed identifier to the terminal device. This identity response guarantees prior use of the identity request, namely, the communication of a privacy preserving identifier by the secure element.

In a preferred embodiment, the secure control unit is configured to execute the encryption function based on an elliptic curve integrated encryption scheme - ECIES, wherein the secure control unit is configured to derive an encryption key for encrypting the subscription permanent identifier to the subscription concealed identifier and to generate the session subscriber authentication key within a single execution of the encryption function.

For instance, the ECIES as defined in the norm ETSI TS 23.501, e.g., Version 17.10.0, may be used to conceal the SUPI and additionally derive the session subscriber authentication key within the one single and the same execution. In particular, the ECIES may be specified according to SECG SEC 1: Recommended Elliptic Curve Cryptography, Version 2.0, 2009 and SECG SEC 2: Recommended Elliptic Curve Domain Parameters, Version 2.0, 2010.

In a preferred embodiment, a public key of the core network entity is stored in the secure storage unit. The public key may be the provisioned public key of the home network. The public key may be identified by a home network public key identifier which is used to indicate which public/private key pair is used for SUPI protection and de-concealment of the SUCI. To be precise, the public key of the core network entity is the public part of the respective public/private key pair.

According to this embodiment, the secure control unit is adapted to generate an ephemeral cryptographic key pair comprising a public part and a private part. This cryptographic key pair is ephemeral since it is only used within a single execution of the encryption function. In other words, the cryptographic key pair is strictly linked to the generated SUCI and the generated session subscriber authentication key. The ephemeral cryptographic key pair is preferably not stored in the secure element. This ephemeral cryptographic key pair may cause individualization of the freshly generated session subscriber authentication key.

The secure control unit may be further configured to generate an ephemeral shared key based on the private part of the ephemeral cryptographic key pair generated by the secure control unit and the public key of the core network entity. Similar to the ephemeral cryptographic key pair, the ephemeral shared key is a temporal key which is only relevant to a single execution of the encryption function. Therefore, the ephemeral shared key preferably is not stored in the secure memory unit.

The secure control unit may be further adapted to derive the session subscriber authentication key based on the ephemeral shared key. Preferably, the session subscriber authentication key is derived similarly to the ephemeral encryption key used for encrypting the SUPI and the ephemeral mac key used for generating the MAC-tag value according to Annex C.3 of the norm EGPP TS 33.501.

In a preferred embodiment, the secure control unit is further configured to generate the identity response comprising a public part of the ephemeral cryptographic key pair and a response parameter, in which a flag indicating a generation of the session subscriber authentication key is stored. Preferably, the public part of the ephemeral cryptographic key pair and the response parameter are concatenated in the identity response. The response parameter may indicate that the secure element successfully generated a fresh session subscriber authentication key based on which the next authentication procedure should be executed. Hence, the core network entity eventually receiving the response parameter via the terminal device may, based on this indication stored in the response parameter, generated the same session subscriber authentication key using the public part of the ephemeral cryptographic key pair of the identity response and its private key, i.e., private part of its public/private key pair. Hence, this feature enables a mutual authentication of the secure element and the core network entity based on the previously generated session subscriber authentication key, which is generated first in the secure element and may be generated once more by the core network entity based on the identity response.

In a preferred embodiment, the identity request comprises a request parameter, in which a key generation indication is stored, wherein the secure control unit is configured to additionally generate the session subscriber authentication key based on the key generation indication.

This embodiment allows to enable and disable the generation of a fresh session subscriber authentication key (switch on/ off the generation of session subscriber authentication key). This enabling/disabling may be based on a binary input parameter as the key generation indication. Thus, it is possible to control the amount of session authentication key generations, since it may not be necessary to generate a fresh session authentication key with every subsequent authentication procedure. For instance, the session subscriber authentication key may be generated in the first place, being indicated by setting the request parameter to a first value, e.g., '01'. During the next predefined number of identity requests, the request parameter may be set to a second value, e.g., '02', indicating to not generate a new session subscriber authentication key when executing the encryption function. As request parameter, for instance, the parameter P1 of the command parameters of the GET IDENTITY command according to clause 7.5.2 of the norm ETSI TS 131 102 may be used. The parameter P1 is currently unused, i.e., set as '00' according to said norm, and therefore predestinated for indicating the request parameter. However, there may be other, in particular implementation-specific, ways of indicating the request parameter. Not limiting examples for a next predefined number of identity requests may be two, three, five, ten, fifteen and/or twenty or even higher. This predefined number may be adjusted based on security needs within the core network, e.g., a core network requiring high security standards, e.g. since personal data are shared more often, may set a low next predefined number, e.g. lower than five, whereas a core network requiring low security standards, e.g. since only IoT data are mostly shared, may set a high next predefined number, e.g. above ten.

In other words, this embodiment enables the core network to decide whether to request generating a new (fresh) subscriber authentication key. If so decided, the core network entity may indicate this request, e.g., in the GET IDENTITY command, so that the new (fresh) subscriber authentication key is generated and then after may be used in further authentication procedures, e.g., AUTHENTICATE commands, until there is a next regeneration request of the core network entity.

In a preferred embodiment, the secure element of the terminal device is any of the group consisting of: a subscriber identity module, SIM, an embedded SIM, an integrated SIM, a software application, and combinations thereof.

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". Secure element also includes USIM, TSIM, ISIM, CSIM or R-UIM.

A secure element, abbreviated SE, in the sense of the invention is an electronic module reduced in size and resource scope, which may have a control unit (microcontroller) and at least one interface (data interface) for communication with instances located outside the secure element, such as terminal devices, servers, etc.. This communication preferably takes place via a connection protocol, in the case of a secure element, in particular a protocol in accordance with the ETSI TS 102 221 or ISO-7816 standard.

The secure element can also be a software component in a trusted part of an operating system, a so-called Trusted Execution Environment, or TEE, of the device. For example, the secure element is formed within a secure runtime environment in the form of programs running therein, so-called "trustlets".

The secure element can also be an integral part of a larger integrated circuit, such as a modem or application processor. Such UICCs are referred to as "integrated UICC", "integrated TRE", "integrated eUICC" or "integrated SE". Such secure elements are permanently integrated into an SoC as an integrated processor block and can be connected via an in-chip bus.

The SE can also be an integral part of a larger integrated circuit, such as a modem or application processor. Such SEs are referred to as "integrated UICC," "integrated TRE," "integrated eUICC," or "integrated SE." Such SEs are permanently integrated into an SoC as an integrated processor block and can be connected via an in-chip bus. The SE has, for example, an internal or external secure non-volatile memory area in which the identity data is securely placed to prevent tampering and/or misuse attempts during identification and/or authentication to the network.

In one embodiment, the SE can be operable by means of a terminal device, whereby the SE in this embodiment is self-sufficient except for supply signals such as supply voltage, clock, reset, etc. Then the SE may have an interface (data interface, communication interface) for communication with the terminal device, into which the SE may be inserted ready for operation. This communication preferably takes place via a connection protocol, in particular a protocol in accordance with the ETSI TS 102 221 or ISO-7816 standard.

Provided is further a terminal device that is adapted to communicate securely over a mobile communication network. The terminal device comprises a secure element as described above, and a communication interface which is adapted to communicate via the mobile communication network.

The terminal device is configured to:
- receive a device identity request from a core network entity,
- generate, based on the device identity request, the identity request and provide the identity request to the secure element,
- receive the identity response from the secure element, and
- return, based on the identity response, a device identity response to the core network entity.

In other words, the terminal device is adapted to forward an identity request originally from the core network entity to its secure element and its identity response to the core network entity. That is, the subscriber identification mechanism may be invoked by the core network entity of the serving network, e.g., when the terminal device cannot be identified by means of a temporary identity. In particular, the subscriber identification mechanism may be used when the core network entity cannot retrieve the SUPI based on the temporary identity. This mechanism usually is initiated by the core network entity, e.g., an access and mobility management function - AMF - that requests the terminal device to send the SUCI of its secure element. The AM is responsible for managing the mobility of 5G devices, such as performing location tracking and handovers between different base stations. Moreover, the AMF manages the establishment and termination of sessions for 5G devices.

Provided is further a system for securely communicating over a mobile communication network.

The system may comprise a terminal device as described above and a core network entity of the serving network.

The core network entity, preferably the AMF, is configured to:
- send the device identity request to the terminal device,
- receive the device identity response,
- generate, based on the device identity request, the session subscriber authentication key, and
- authenticate the core network entity to the secure element of the terminal device using the generated session subscriber authentication key.

The core network identity is configured to generate the identical session subscriber authentication key as the secure element based on the input received from the identity response. Therefore, the newly generated session subscriber authentication key may be used for mutual authentication between the secure element (or the terminal device comprising the secure element) and the core network entity. Accordingly, the original subscriber authentication key is not needed any more for this mutual authentication. The freshly generated session subscriber authentication key may be regenerated by the core network entity such that the session subscriber authentication key itself is never transferred over-the-air in the system. In fact, the session subscriber authentication key is only generated locally, once at the secure element and thereafter, based on the identity response, by the core network entity. The resulting system increases the security of the mutual authentication procedure as a fresh session subscriber authentication key may be generated in the system essentially any time, on demand.

In a preferred embodiment, the core network entity is further configured to execute, based on the device identity response, a decryption function, to decrypt the subscription concealed identifier and additionally generate the session subscriber authentication key. In other words, the fresh session subscriber authentication key thus may be obtained in the core network entity as a side product of the decryption function used to reveal the SUPI from the SUCI received by way of the identity response. This embodiment ensures a secure generation of the session subscriber authentication key in the core network entity.

In a preferred embodiment, the core network entity is further configured to generate the device identity request further comprising the request parameter, in which the key generation indication is stored. The request parameter, as described above, may encode whether to generate a new session subscriber authentication key, which may control the behavior of the encryption function executed by the secure control unit of the secure element.

Provided is further a method for securing a communication over a mobile communication network, the method to be executed by a secure element as described above.

The method comprises firstly, generating a session subscriber authentication key and authenticating, based on a received authentication request from the core network entity, the secure element to the core network entity using the previously generated session subscriber authentication key. This method essentially causes the advantages of the secure element described above, which are therefore also linked to the corresponding method steps.

In a preferred embodiment, the method further comprises:
- receiving the identity request from the terminal device,
- executing, based on the received identity request, the encryption function to generate the subscription concealed identifier based on the subscription permanent identifier and additionally the session subscriber authentication key.

Further preferably, the method, in particular executing the encryption function, comprises:
- generating the ephemeral cryptographic key pair comprising the public part and the private part based on an elliptic curve cryptography,
- generating the ephemeral shared key based on the private part of the ephemeral cryptographic key pair and the public key of the core network entity, and
- deriving the session subscription authentication key based on the ephemeral shared key.

Provided is further a computer-readable medium comprising instructions, which, when executed in a secure element as described above, cause the secure control unit to carry out above-identified method steps.

Provided is further a method for securing a communication in a system, the method to be carried out by a core network entity as described above.

The method comprises:
- sending the device identity request to the terminal device,
- receiving the device identity response,
- generating, based on the device identity response, the session subscriber authentication key, and
- authenticating, using an authentication request, the core network entity to the secure element of the terminal device using the previously generated session subscriber authentication key.

To be precise, the method is initiated by the core network entity, preferably the AMF, that request the terminal device to reveal its identity. Thereby, as a side product, the terminal device, more precisely its secure element, may generate a new session subscriber authentication key and notify the core network entity correspondingly by way of the identity response, which is forwarded by the terminal device as device identity response. As a result, the core network entity may generate the new subscriber authentication key by itself and employ the fresh session subscriber authentication key for subsequent authentication procedures of the terminal device or its secure element, respectively.

Preferably, the device identity response comprises the SUCI to identify the terminal device. Based on the device identity request, the terminal device, in particular its secure element, shall calculate a fresh SUCI, as described above.

In a preferred embodiment, the method further comprises executing, based on the device identity response, a decryption function, to decrypt the subscription concealed identifier and additionally generate the session subscriber authentication key.

Further preferably, the method, in particular executing the decryption function, comprises:
- extracting the public part of the ephemeral cryptographic key pair,
- generating, based on the public part of the ephemeral cryptographic key pair and a private key of the core network entity the ephemeral shared key, and
- deriving the session subscription authentication key based on the ephemeral shared key.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure element according to an aspect of the invention.
Fig. 2 shows an exemplary embodiment of a system according to an aspect of the invention.
Fig. 3 shows an exemplary flow chart of a method according to an aspect of the invention.
Fig. 4 shows a first exemplary scheme of method steps to be executed in a secure element according to an aspect of the invention.
Fig. 5 shows a second exemplary scheme of method steps to be executed in a secure element according to an aspect of the invention.
Fig. 6 shows an exemplary scheme of method steps to be executed in a core network entity according to an aspect of the invention.

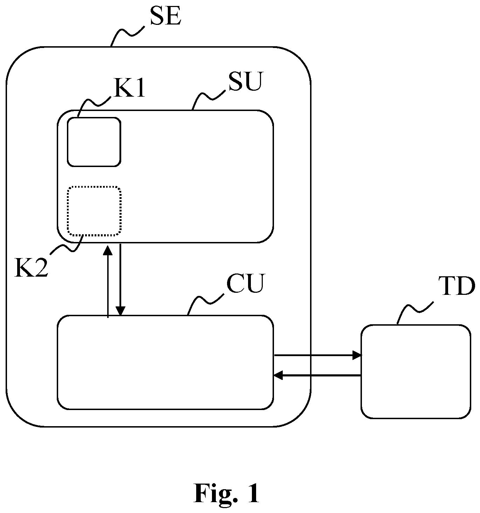

Fig. 1 shows an exemplary embodiment of a secure element according to an aspect of the invention.

The embodiment of the secure element SE of Fig. 1 may comprise a secure storage unit SU, in which a subscriber authentication key K1 is stored. The subscriber authentication key K1 may be used according to the norm ETSI TS 133 102 or ETSI TS 133 103 to authenticate the secure element SE to a core network entity CN. However, the gist of the present invention is to first generate a fresh session subscriber authentication key K2 in a secure control unit CU of the secure element SE and to make use of this previously generated session subscriber authentication key K2 instead of the pre-installed subscriber authentication key K1. In Fig. 1, the fresh session subscriber authentication key K2 is depicted by a dotted rectangle to indicate that the session subscriber authentication key K2 is not pre-installed but freshly generated in the secure element SE.

The session subscriber authentication key K2 is generated prior to an authentication request. According to one aspect of the disclosure, the session subscriber authentication K2 is generated directly before the authentication procedure. According to another aspect of the invention, the session subscriber authentication key K2 is generated at a time interval before the authentication procedure. The time interval may be predefined, or last for any arbitrary, measurable value.

The secure control unit CU of the secure element SE of Fig. 1 may be configured to authenticate, based on a received authentication request, the secure element SE to a core network entity CN using the newly generated session subscriber authentication key K2.

The secure control unit CU may be communicatively coupled to the terminal device TD.

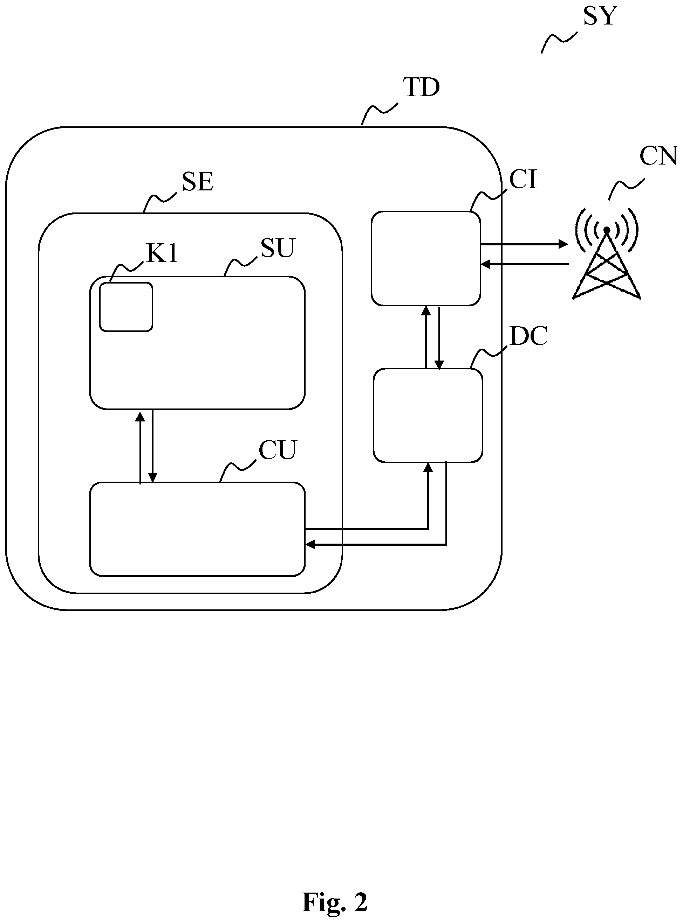

Fig. 2 shows an exemplary embodiment of a system according to an aspect of the invention.

The system SY according to Fig.2 may comprise a terminal device TD and a core network entity CN.

The terminal device TD may comprise the secure element SE, a control unit DC and a communication interface CI. The terminal device TD may be communicatively coupled to the core network entity CN through the communication interface CI.

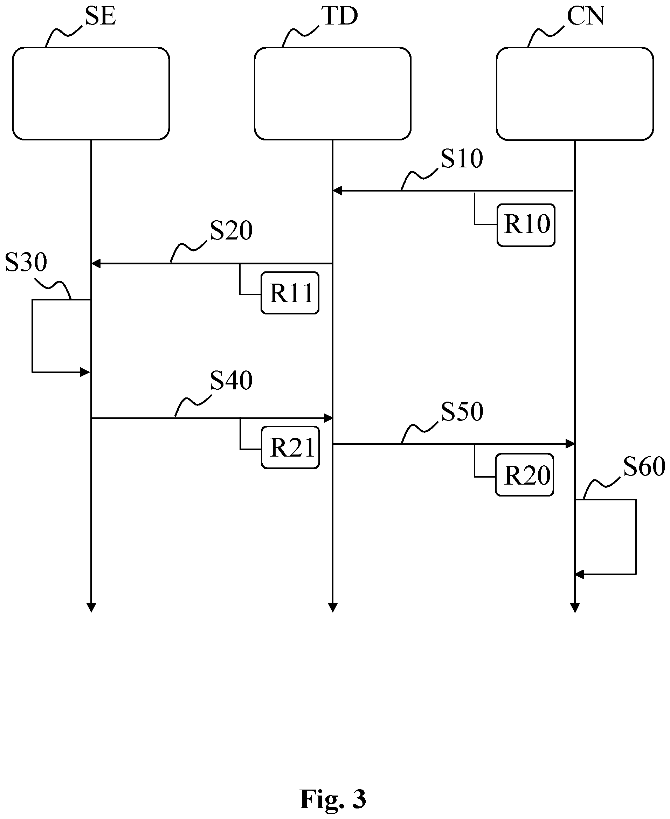

The system SY of Fig. 2 may be configured to mutually authenticate the terminal device TD (or its secure element SE) and the core network entity CN using a fresh session subscriber authentication key K2 instead of the pre-installed subscriber authentication key K1, as described in some more detail with respect to Fig. 3.

Fig. 3 shows an exemplary flow chart of a method according to an aspect of the invention.

The method according to the embodiment of Fig. 3 is initiated by an device identity request R10 being sent in step S10 by the core network entity CN to the terminal device TD.

The method continues by the terminal device TD forwarding in step S20 the device identity request R10 as identity request R11 to its secure element SE.

The device identity request R10 and the identity request R11 preferably comprise a request parameter indicating whether a new session subscriber authentication key K2 shall be generated. The identity request R11 may be embodied as GET IDENTIY command according to the norm ETSI TS 133 103 or ETSI TS 133 102. In this embodiment, the parameter P1 may serve as request parameter. This embodiment has the advantage that existing mechanisms may be used to trigger the additional generation of the session subscriber authentication key K2 in the secure element SE.

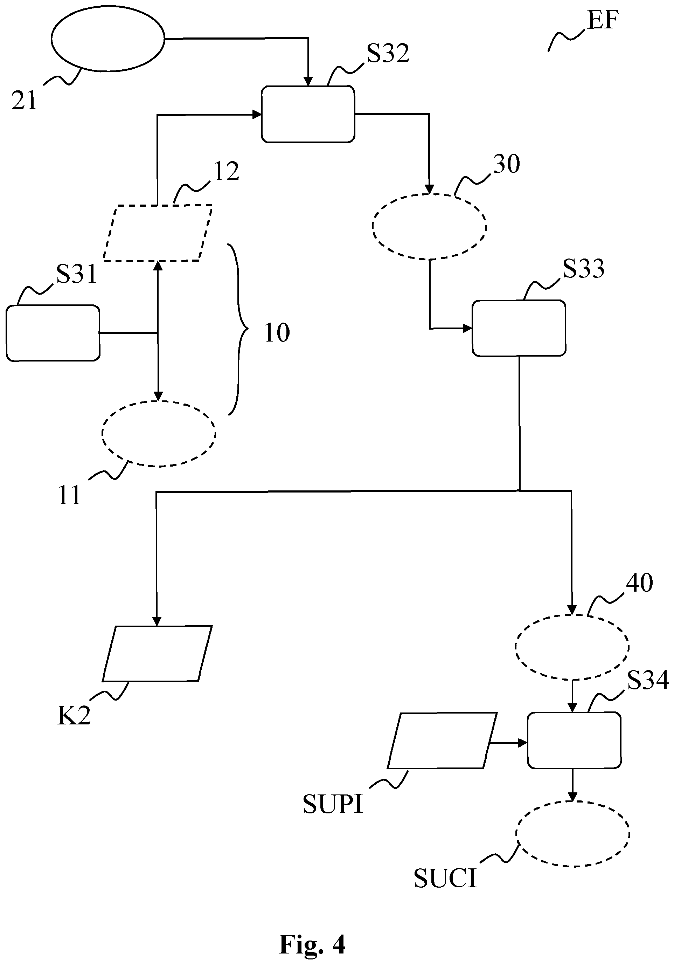

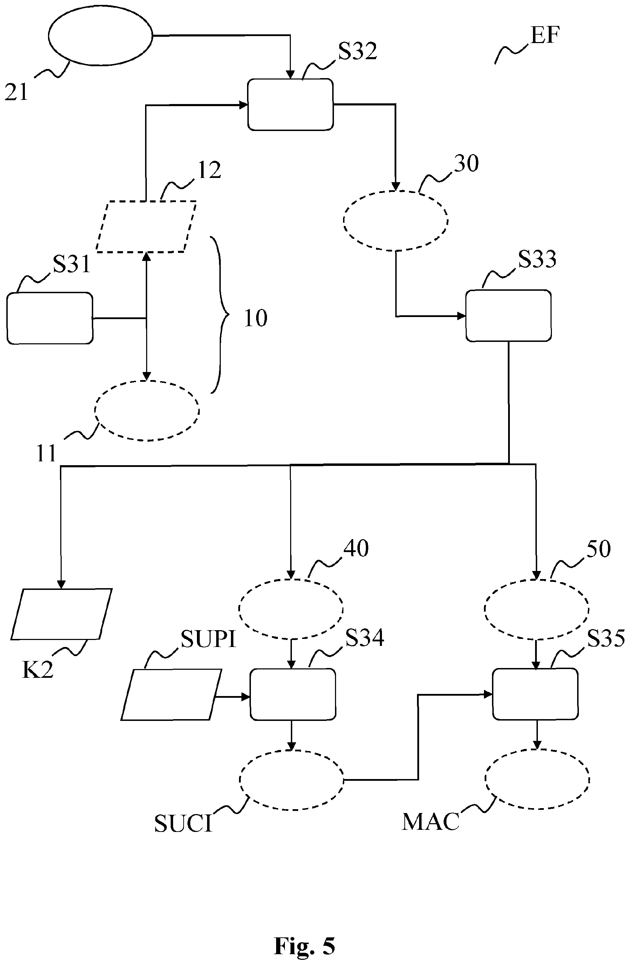

Upon receiving the identity request R11, the secure element SE, in particular its secure control unit CU, generates the new session subscriber authentication key K2 in step S30. Different embodiments of step S30 are described in more detail in Fig. 4 and Fig. 5.

Preferably, the secure element SE additionally generates an answer to the identity request R11 in step 30. Should the identity request R11 be the GET IDENTITY command mentioned above, the expected answer comprises the SUCI which is a privacy preserving identifier containing the concealed SUPI. The use of this function for generating the session subscriber authentication key K2 ensures that the session subscriber authentication key K2 is generated prior to mutual authentication between the secure element SE and the core network entity CN.

In step S30, the secure element SE may generate an identity response R21 which is sent in step S40 to the terminal device TD. Components of the identity response R21 are discussed with respect to Fig. 4 and Fig. 5.

The method continues by the terminal device TD forwarding in step S50 the identity response R50 as device identity response R20 to the core network entity CN.

In subsequent step S60, the core network entity CN may generate, based on the device identity response R20, the session subscriber authentication key K2.

Subsequently, the terminal device TD (secure element SE) and the core network entity CN may mutually authenticate each other using known authentication procedures, in particular the AUTHENTICATE command as specified in the norm ETSI TS 133 102 and/or ETSI TS 133 103.

Fig. 4 shows a first exemplary scheme of method steps to be executed in a secure element according to an aspect of the invention.

The scheme of the embodiment of Fig. 4 illustrates the encryption function EF based on the ECIES according to Appendix C3 of the norm 3GPP TS 33.501 version 17.10.0, which is adapted to additionally generate the subscriber authentication key K2 in a single execution in the secure element SE.

The encryption function EF may initiate with step S31 by generating an ephemeral cryptographic key pair 10 comprising a public part 11 and a private part 12.

In Figs. 4-6, the private part of a key pair and private keys are depicted by parallelograms, wherein ephemeral keys are depicted by a dashed outline and non-ephemeral keys by a solid outline.

In step S32, a key agreement is generated based on the private part 12 of the ephemeral key pair 10 and the public key 21 of the core network entity CN. Hence, the public key 21 needs to be stored in the secure storage unit SU of the secure element SE according to this embodiment.

Subsequently, an ephemeral shared key 30 is generated based on the key agreement and used to derive in step S33 both the new session subscriber authentication key K2 and the ephemeral encryption key 40. The SUCI may be obtained by concealing the SUPI in step S34 using the ephemeral encryption key 40.

In this embodiment, the final output of the encryption function comprises a concatenation of the public part 11 of the ephemeral key pair 10, the ciphertext (SUCI), and preferably a response parameter indicating that a new session subscriber authentication key K2 has been generated. This output of the encryption function may be comprised in the identity response R21 delivered to the terminal device TD.

Fig. 5 shows a second exemplary scheme of method steps to be executed in a secure element according to an aspect of the invention.

The embodiment of Fig. 5 corresponds to the embodiment of Fig. 4 until step S33.

In step S33 of Fig. 5, compared to step S33 of Fig. 4, an ephemeral mac key 50 is additionally derived. The MAC denotes the message authentication code which may be used for authentication and/or data integrity checks of signaling messages.

In step S35, a MAC tag value is generated based on the SUCI, in particular the cipher text value of the plaintext input encoding the SUPI, and the ephemeral mac key 50.

In this embodiment, the final output of the encryption function comprises a concatenation of the public part 11 of the ephemeral key pair 10, the ciphertext (SUCI), the MAC tag value, and preferably a response parameter indicating that a new session subscriber authentication key K2 has been generated. This output of the encryption function may be comprised in the identity response R21 delivered to the terminal device TD.

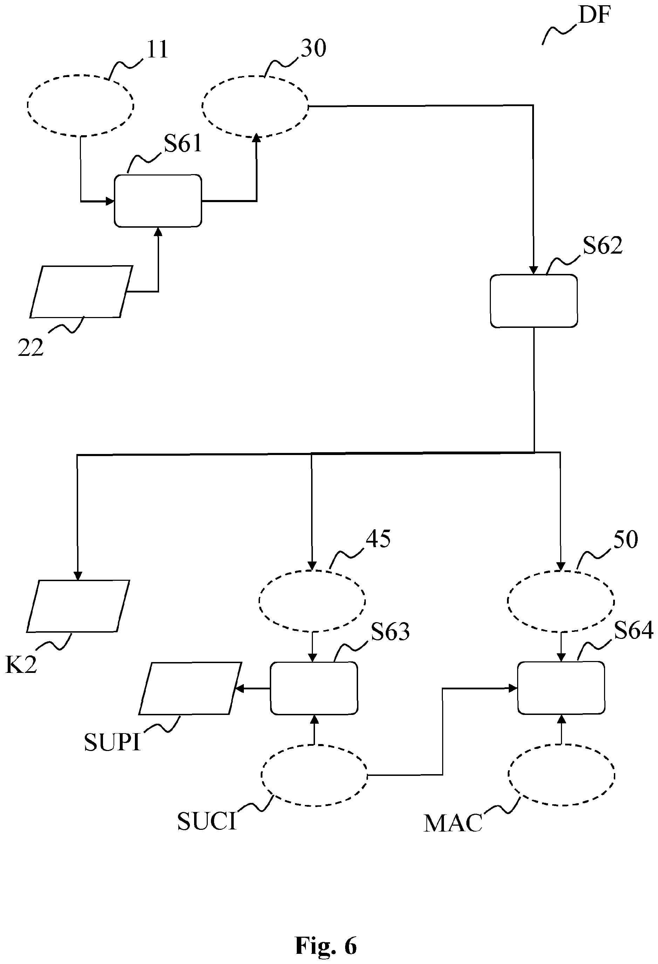

Fig. 6 shows an exemplary scheme of method steps to be executed in a core network entity according to an aspect of the invention.

The scheme of the embodiment of Fig. 6 illustrates the decryption function DF based on the ECIES, which is adapted to additionally generate the subscriber authentication key K2 in a single execution at the core network entity CN.

The decryption function EF may initiate with step S61 by achieving a key agreement based on its private key 22 and the public part 11 of the ephemeral key pair 10 received from the device identity response R20.

The output of this key agreement is an ephemeral shared key 30, which is identical to the ephemeral shared key 30 generated within the corresponding execution of the encryption function EF.

In step S62, the ephemeral shared key 30 is used to derive the new session subscriber authentication key K2, an ephemeral decryption key 45 to reveal the SUPI, and an ephemeral mac key 50 to verify the MAC tag value. The SUPI may be obtained by generating the ephemeral decryption key 45 based on which the ciphertext (SUCI) comprised in the device identity response R20 may be decrypted in step S63. The MAC tag value may be verified based on the ciphertext (SUCI) and the ephemeral mac key 50 which may be derived in step S62.

After deriving the session subscriber authentication key K2 in the core network entity CN, the same session subscriber authentication key K2 exists in the terminal device TD and the core network entity CN such that the core network entity CN may initiate a mutual authentication using the fresh session subscriber authentication key K2 instead of the static subscriber authentication key K1.

### Reference signs:

- SE: Secure element
- SU: Secure storage unit
- CU: Secure control unit
- K1: Subscriber authentication key
- K2: Session subscriber authentication key

- TD: Terminal device
- DC: Control unit of the terminal device
- CI: Communication interface

- CN: Core network entity

- SY: System

- R10: device identity request
- R11: identity request
- R20: device identity response
- R21: identity response

- EF: Encryption function
- DF: Decryption function
- 10: ephemeral cryptographic key pair
- 11: public part of the ephemeral key pair 10
- 12: private part of the ephemeral key pair 10
- 20: public/private key pair of the core network entity
- 21: public part of the key pair 20
- 22: private part of the key pair 20
- 30: ephemeral shared key
- 40: ephemeral encryption key
- 45: ephemeral decryption key
- 50: ephemeral MAC key

## Claims

1. A secure element (SE) to securely communicate over a mobile communication network, the secure element comprising:
- a secure storage unit (SU), in which a subscriber authentication key (K1) is stored; and
- a secure control unit (CU) which is configured to firstly generate a session subscriber authentication key (K2), and, based on receiving an authentication request from a core network entity (CN), to authenticate the secure element (SE) to the core network entity (CN) using the previously generated session subscriber authentication key (K2).

2. The secure element (SE) according to claim 1, wherein the secure control unit (CU) is further configured to receive an identity request (R11) from a terminal device (TD) and to generate the session subscriber authentication key (K2) based on the received identity request (R11).

3. The secure element (SE) according to the preceding claim, wherein a globally unique subscription permanent identifier (SUPI) is stored in the secure storage unit (SU) and wherein the secure control unit (CU) is further configured to:
- execute, based on the received identity request, an encryption function (EF) to generate a subscription concealed identifier (SUCI) based on the subscription permanent identifier (SUPI) and additionally the session subscriber authentication key (K2),
- store the session subscriber authentication key (K2) in the secure storage unit (SU), and
- return an identity response (R21) comprising the subscription concealed identifier (SUCI) to the terminal device (TD).

4. The secure element (SE) according to the preceding claim, wherein the secure control unit (CU) is configured to execute the encryption function (EF) based on an elliptic curve integrated encryption scheme, wherein the secure control unit (CU) is configured to derive an encryption key (EK) for encrypting the subscription permanent identifier (SUPI) to the subscription concealed identifier (SUCI) and the session subscriber authentication key (K2) within a single execution of the encryption function (EF).

5. The secure element according to the preceding claim, wherein a public key (21) of the core network entity is stored in the secure storage unit (SU), wherein the secure control unit (CU) is adapted
- to generate an ephemeral cryptographic key pair (10) comprising a public part (11) and a private part (12),
- to generate an ephemeral shared key (20) based on the private part (12) and the public key (21) of the core network entity (CN), and
- to derive the session subscription authentication key (K2) based on the ephemeral shared key (20).

6. The secure element (SE) according to the preceding claim, wherein the secure control unit (CU) is further configured to generate the identity response (R21) comprising a public part (11) of the ephemeral cryptographic key pair (10) and a response parameter, in which a flag indicating a generation of the session subscriber authentication key (K2) is stored.

7. The secure element (SE) according to any of the preceding claims 2 to 6, wherein the identity request comprises a request parameter, in which a key generation indication is stored, wherein the secure control unit (CU) is configured to additionally generate the session subscriber authentication key (K2) based on the key generation indication.

8. The secure element (SE) according to any of the preceding claims, being any of the group consisting of:
- a smart card,
- a subscriber identity module - SIM,
- an embedded SIM,
- an integrated SIM,
- a software application, and
- combinations thereof.

9. A system for securely communicating over a mobile communication network, the system comprising:
- a terminal device (TD) comprising:
- a secure element (SE) according to any of the preceding claims; and
- a communication interface (CI) which is adapted to communicate via the mobile communication network,
wherein the terminal device (TD) is configured to:
- receive a device identity request (R10) from a core network entity (CN),
- generate, based on the device identity request (R10), the identity request (R11) and provide the identity request (R11) to the secure element (SE),
- receive the identity response (R21) from the secure element (SE), and
- return, based on the identity response (R21), a device identity response (R20) to the core network entity (CN); and
- a core network entity (CN) which is configured to:
- send the device identity request (R10) to the terminal device (TD),
- receive the device identity response (R20),
- generate, based on the device identity request, the session subscriber authentication key (K2)
- authenticate the core network entity (CN) to the secure element (SE) of the terminal device (TD) using the generated session subscriber authentication key (K2).

10. The system of claim 9, wherein the core network entity (CN) is further configured to execute, based on the device identity response (R20), a decryption function (DF), to decrypt the subscription concealed identifier (SUCI) and additionally generate the session subscriber authentication key (K2).

11. The system of any of claims 9 or 10, wherein the core network entity (CN) is further configured to generate the device identity request (R10) further comprising the request parameter, in which the key generation indication is stored.

12. A method for securing a communication over a mobile communication network, the method to be executed by a secure element (SE) according to any of the claims 1 to 9, the method comprising:
- firstly generating a session subscriber authentication key (K2), and
- authenticating, based on a received authentication request from the core network entity (CN), the secure element (SE) to the core network entity (CN) using the previously generated session subscriber authentication key (K2).

13. The method of claim 12, when the secure element (SE) depending on claim 5, the method further comprising:
- receiving (S20) the identity request (R11) from the terminal device (TD),
- executing (S30), based on the received identity request (R11), the encryption function (EF) to generate the subscription concealed identifier (SUCI) based on the subscription permanent identifier (SUPI) and additionally the session subscriber authentication key (K2), wherein preferably
- generating (S31) the ephemeral cryptographic key pair (10) comprising the public part (11) and the private part (12) based on an elliptic curve cryptography,
- generating (S32) the ephemeral shared key (20) based on the private part (12) of the ephemeral cryptographic key pair (10) and the public key (21) of the core network entity (CN), and
- deriving (S33) the session subscription authentication key (K2) based on the ephemeral shared key (S20),
- storing the session subscriber authentication key (K2) in the secure storage unit (SU), and
- returning (S40) the identity response (R21) comprising the subscription concealed identifier (SUCI) to the terminal device (TD).

14. A method for securing a communication in a system according to any of claims 9 to 11, the method to be executed by a core network entity (CN), the method comprising:
- sending (S10) the device identity request (R10) to the terminal device (TD),
- receiving (S50) the device identity response (R20),
- generating (S60), based on the device identity response (R20), the session subscriber authentication key (K2), and
- authenticating, using an authentication request, the core network entity (CN) to the secure element (SE) of the terminal device (TD) using the previously generated session subscriber authentication key (K2).

15. The method of claim 14, wherein the method further comprises:
- executing (S60), based on the device identity response (R20), a decryption function (DF), to decrypt the subscription concealed identifier (SUCI) and additionally generate the session subscriber authentication key (K2), wherein preferably
- extracting the public part (11) of the ephemeral cryptographic key pair (10),
- generating (S61), based on the public part (11) of the ephemeral cryptographic key pair (10) and a private key (22) of the core network entity (CN) the ephemeral shared key (20), and
- deriving (S62) the session subscription authentication key (K2) based on the ephemeral shared key (S20).
